# EUROPÄISCHE PATENTSCHRIFT

(11) **EP 2 984 420 B1**
(45) Veröffentlichungstag und Bekanntmachung des Hinweises auf die Patenterteilung: **17.07.2019**
(21) Anmeldenummer: 14715009.8
(22) Anmeldetag: 03.04.2014
(51) Int. Cl.: F25B 39/02

(54) **KÄLTEGERÄT MIT EINEM VERDAMPFER**
REFRIGERATION DEVICE COMPRISING AN EVAPORATOR
APPAREIL FRIGORIFIQUE MUNI D'UN ÉVAPORATEUR

(30) Priorität: 09.04.2013 DE 102013206203
(43) Veröffentlichungstag der Anmeldung: 17.02.2016
(73) Patentinhaber: BSH Hausgeräte GmbH, 81739 München (DE)
(72) Erfinder: SCHLÖGEL, Bernd, 89547 Gerstetten (DE); VOGL, Andreas, 89437 Haunsheim (DE); MEHNER, Reinhard, 04720 Döbeln (DE); MICKO, Daniel, 04001 Kosice (SK); MOCH, Holger, 89537 Giengen (DE)
(86) Internationale Anmeldenummer: PCT/EP2014/056691
(87) Internationale Veröffentlichungsnummer: WO 2014/166805

(56) Entgegenhaltungen:
- WO-A1-2005/026641
- WO-A1-2010/055468
- DE-B- 1 054 100
- JP-A- H1 019 417

## Beschreibung

Die vorliegende Erfindung betrifft ein Kältegerät mit einem Verdampfer.

An der Einspritzstelle eines Kältemittels in einen Verdampfer eines Kältegerätes wird Kältemittel von einem Drosselorgan in ein Einlassrohr des Verdampfers gespritzt, das einen deutlich größeren Innendurchmesser als an der Öffnung des Drosselorgans aufweist. Dabei entstehen Strömungsgeräusche des Kältemittels.

WO2010/055468 A1 offenbart ein Kältegerät mit einem Verdampfer gemäß dem Oberbegriff des Anspruchs 1.

JP H10 19417 A offenbart einen Verdampfer vom Rollbond-Typ, bei dem ein Kältemittelkanal durch Einpressen einer Flüssigkeit zwischen zwei Verdampferplatten gebildet ist. Zur Verringerung von Einspritzgeräuschen soll der Kanal stromabwärts von einer Einspritzstelle einen stufenweise zunehmenden Querschnitt aufweist.

DE 10 54 100 B zeigt einen Verdampfer, den Zeichnungen zufolge ebenfalls vom Rollbond-Typ, bei dem der Kältemittelkanal stromabwärts von der Einspritzstelle eine oder mehrere Verengungen aufweist.

Es ist die der Erfindung zugrundeliegende Aufgabe, ein Kältegerät mit einem Verdampfer anderen Typs anzugeben, bei dem Geräusche verringert werden, die beim Einspritzen eines Kältemittels in einen Verdampfer entstehen.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch ein Kältegerät mit einem Verdampfer zum Verdampfen eines Kältemittels gemäß Anspruch 1 gelöst. Dadurch wird beispielsweise der technische Vorteil erreicht, dass eine Geräuschverringerung der Strömungsgeräusche an der Einspritzstelle vom Drosselorgan in den Verdampfer erreicht wird. Dadurch wird die Geometrie des Verdampfers derart geändert, dass sich aufgrund einer geänderten Strömung ein verbessertes Geräuschverhalten ergibt.

wird beispielsweise der technische Vorteil erreicht, dass durch die konkave Einwölbung die Steifigkeit und das Biegemoment des Einlassrohrs beibehalten werden.

In einer weiteren vorteilhaften Ausführungsform des Kältegerätes ist das Einlassrohr im Querschnitt kreisförmig ist. Dadurch wird beispielsweise der technische Vorteil erreicht, dass das Einlassrohr mit einem geringen Materialaufwand und einem hohem Strömungsquerschnitt hergestellt werden kann.

In einer weiteren vorteilhaften Ausführungsformdes Kältegerätes wird durch den Verengungsbereich eine Kammer im Einlassrohr gebildet.Dadurch wird beispielsweise der technische Vorteil erreicht, dass die Kammer einen Pufferraum für das einströmende Kältemittel bildet und die Geräuschentwicklung weiter reduziert wird.

In einer weiteren vorteilhaften Ausführungsformdes Kältegerätes umfasst das Einlassrohr mehrere Verengungsbereiche. Dadurch wird beispielsweise der technische Vorteil erreicht, dass sich die Geräuschentwicklung noch weiter reduzieren lässt.

In einer weiteren vorteilhaften Ausführungsformdes Kältegerätes weist der Verengungsbereich einen kreisförmigen, rechteckigen oder sternförmigen Querschnitt auf.Dadurch wird beispielsweise der technische Vorteil erreicht, dass sich der Verengungsbereich mit verringertem Strömungsquerschnitt auf einfache Weise herstellen lässt.

In einer weiteren vorteilhaften Ausführungsformdes Kältegerätes umfasst das Einlassrohr einen konischen Anschlussbereich für ein Kapillarrohr. Dadurch wird beispielsweise der technische Vorteil erreicht, dass sich das Geräuschverhalten des Verdampfers noch weiter verbessert.

In einer weiteren vorteilhaften Ausführungsformdes Kältegerätes ist der Verengungsbereich direkt nach dem Anschlussbereich angeordnet. Dadurch wird beispielsweise der technische Vorteil erreicht, dass

In einer weiteren vorteilhaften Ausführungsformdes Kältegerätes ist Verengungsbereich in einem Abstand von weniger als 50 mm nach einem Ende eines Kapillarrohres angeordnet. Dadurch wird beispielsweise ebenfalls der technische Vorteil erreicht, dass sich das Geräuschverhalten noch weiter verbessert.

In einer weiteren vorteilhaften Ausführungsformdes Kältegerätes ist das Verhältnis zwischen dem ersten Strömungsquerschnitt und dem zweiten Strömungsquerschnitt größer als 5:1. Dadurch wird beispielsweise der technische Vorteil erreicht, dass im inneren des Verdampfers Strömungsverhältnisse realisiert werden, die besonders wenige Geräusche verursachen.

Gemäß einem zweiten Aspekt der Erfindung wird die Aufgabe durch ein Verfahren zum Herstellen eines Verdampfers für ein Kältegerät gelöst, der ein Einlassrohr zum Einlassen eines Kältemittels umfasst, mit den Schritten eines Einführens eines Stützdorns, der das Profil eines zweiten Strömungsquerschnitts vorgibt, in das Einlassrohr mit einem ersten Strömungsquerschnitt; Zusammenpressen des Einlassrohres, auf den durch den Stützdornvorgegebenen zweiten Strömungsquerschnitt, um einen Verengungsbereich zu erzeugen; und Entfernen des Stützdorns aus dem Einlassrohr. Dadurch wird beispielsweise der technische Vorteil erreicht, dass der Verdampfer auf besonders einfache Weise hergestellt werden kann.

Ohne im Einlassrohr liegende Abstützung durch den Stützdorn besteht die Gefahr, beim Prägen das Einlassrohr komplett zu verschließen. Außerdem können in diesem Fall vorgegebene Fertigungstoleranzen nicht eingehalten werden. Mit Hilfe des Stützdorns kann die Querschnittsfläche im Verengungsbereich fertigungssicher im geforderten Toleranzbereich hergestellt werden. Daneben ist es mit einem langen Stützdorn möglich, mehrere Prägungen hintereinander auf einer größeren Rohrlänge einzubringen.

In einer vorteilhaften Ausführungsform des Verfahrens wird das Zusammenpressen des Einlassrohres mittels eines radial zur Mitte des Einlassrohres verschiebbaren Umformeinsatzes eines Werkzeuges durchgeführt.Dadurch wird beispielsweise der technische Vorteil erreicht, dass der Verengungsbereich desEinlassrohres auf technisch einfache Weise gebildet werden kann.

In einer weiteren vorteilhaften Ausführungsform des Verfahrens wird beim Zusammenpressen eine konkave Einwölbung in einer Rohrwand des Einlassrohrsdurch einen Prägeabschnitt des Umformeinsatzes erzeugt.Dadurch wird beispielsweise der technische Vorteil erreicht, dassdurch die konkave Einwölbung die Steifigkeit und das Biegemoment des Einlassrohrs beibehalten werden.

In einer weiteren vorteilhaften Ausführungsform des Verfahrens wird der Prägeabschnitt durch eine Rolle gebildet, die an dem Umformeinsatz drehbar gelagert ist.Dadurch wird beispielsweise der technische Vorteil erreicht, dass die Rohroberfläche des Einlassrohres nicht beschädigt oder verletzt wird.

In einer weiteren vorteilhaften Ausführungsform des Verfahrens werden beim Zusammenpressen mehrere konkave Einwölbungen durch mehrere Prägeabschnitte des Umformeinsatzes gleichzeitig erzeugt.Dadurch wird beispielsweise der technische Vorteil erreicht, dass sich mehrere Verengungsbereiche durch einen einzigen Arbeitsschritt erzeugen lassen.

In einer weiteren vorteilhaften Ausführungsform des Verfahrensweist der Stützdorn einen runden Querschnitt auf. Dadurch wird beispielsweise der technische Vorteil erreicht, dass sich auf besonders einfache Weise Verengungsbereiche mit einem runden Querschnitt erzeugen lassen, an dem keine Verwirbelungen oder Turbulenzen des Kältemittels auftreten.

In einer weiteren vorteilhaften Ausführungsform des Verfahrensweist der Stützdorn einen Durchmesser von 1 mm bis 2 mm auf. Dadurch wird beispielsweise der technische Vorteil erreicht, dass die Verengungsberiech mit einer Abmessung herstellen lassen, die besonders geräuscharm ist.

In einer weiteren vorteilhaften Ausführungsform des Verfahrens erfolgt das Zusammenpressen des Einlassrohres mittels gerundeter Backenelemente, die senkrecht zur Längsachse des Einlassrohres aufgedrückt werden. Dadurch wird beispielsweise der technische Vorteil erreicht, dass sich die Verengungsberiech schnell und ohne Knickstellen bilden lassen.

In einer weiteren vorteilhaften Ausführungsform des Verfahrensumfassen die Backenelemente eine halbkreisförmige Aussparung zum Zusammenpressen des Einlassrohres. Dadurch wird beispielsweise der technische Vorteil erreicht, dass das Einlassrohr des Verdampfers in dem Verengungsbereich durch die Backenelemente entsprechend dem eingeführten Stützdorn geformt wird.

Ausführungsbeispiele der Erfindung sind in den Zeichnungen dargestellt und werden im Folgenden näher beschrieben.

Es zeigen:
- Fig. 1: eine schematische Ansicht eines Kältegerätes;
- Fig. 2: eine schematische Ansicht eines Verdampfers mit einem Einlassrohr in einer ersten Ausführungsform;
- Fig. 3: eine schematische Ansicht des Einlassrohres in einer weiteren Ausführungsform;
- Fig. 4: einen Anschlussbereich des Einlassrohres;
- Fig. 5: mehrere Verengungsbereiche in unterschiedlichen Ausführungsformen;
- Fig. 6: mehrere Verengungsbereiche in unterschiedlichen Ausführungsformen;
- Fig. 7: Diagramme der Geräuschentwicklung des Verdampfers mit und ohne Verengungsbereich;
- Fig. 8A: ein Verfahren zum Herstellen des Verdampfers für das Kältegerät;
- Fig. 8B: einen Verengungsbereich in Querschnittsansicht; und
- Fig. 9: das Einlassrohr nach ausgeführtem Prägevorgang;
- Fig. 10: einenweiteren Verengungsbereich in Querschnittsansicht;
- Fig. 11: ein Werkzeug zum Herstellen des Einlassrohres mit dem Verengungsbereich;
- Fig. 12: das Werkzeug zum Herstellen des Einlassrohres in Querschnittsansicht;
- Fig. 13: einen Prägeabschnitt des Werkzeugs;
- Fig. 14: einen Umformeinsatz des Werkzeugs; und
- Fig. 15: Ansichten eines Einlassrohres, das mit dem Werkzeug hergestellt worden ist.

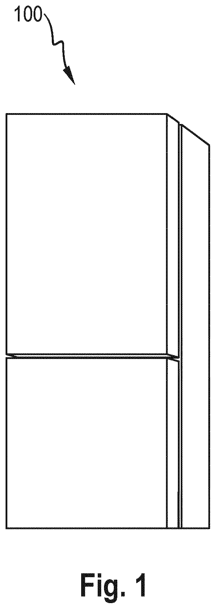

Fig. 1 zeigt einen Kühlschrank stellvertretend für ein Kältegerät 100 mit einer oberen Kühlschranktür und einer unteren Kühlschranktür. Der Kühlschrank dient beispielsweise zur Kühlung von Lebensmitteln und umfasst einen Kältemittelkreislauf mit einem Verdampfer, einem Verdichter, einem Verflüssiger und einem Drosselorgan. Der Verdampfer ist ein Wärmeaustauscher, in dem nach der Expansion das flüssige Kältemittel durch Wärmeaufnahme von dem zu kühlenden Medium, d.h. der Luft im Inneren des Kühlschranks, verdampft wird.

Der Verdichter ist ein mechanisch betriebenes Bauteil, das Kältemitteldampf vom Verdampfer absaugt und bei einem höheren Druck zum Verflüssiger ausstößt. Der Verflüssiger ist ein Wärmeaustauscher, in dem nach der Kompression das verdampfte Kältemittel durch Wärmeabgabe an ein äußeres Kühlmedium, d.h. die Umgebungsluft, verflüssigt wird. Das Drosselorgan ist eine Vorrichtung zur ständigen Verminderung des Druckes durch Querschnittsverengung.

Das Kältemittel ist ein Fluid, das für die Wärmeübertragung in dem kälteerzeugenden System verwendet wird, das bei niedrigen Temperaturen und niedrigem Druck des Fluids Wärme aufnimmt und bei höherer Temperatur und höherem Druck des Fluids Wärme abgibt, wobei üblicherweise Zustandsänderungen des Fluids inbegriffen sind.

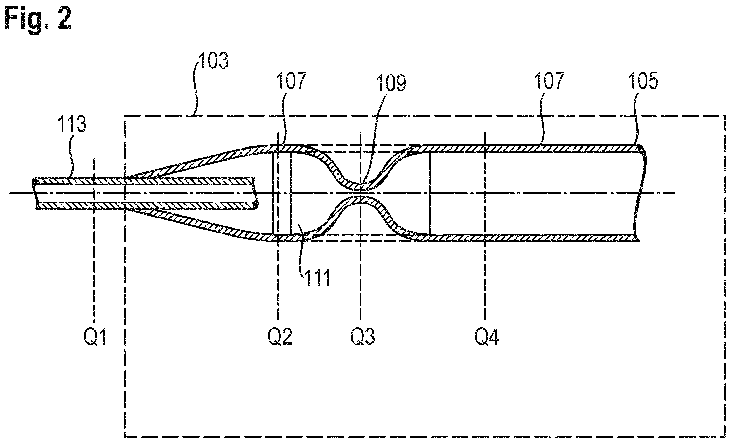

Fig. 2 zeigt eine schematische Ansicht eines Verdampfers 103 mit einem Einlassrohr 105 in einer ersten Ausführungsform.An der Einspritzstelle wird das Kältemittel vom Drosselorgan oder Kapillarrohr 113 in ein Einlassrohr 105 mit deutlich größerem Innendurchmesser als an der Öffnung des Kapillarrohrs 113 eingespritzt. Dabei entstehen Strömungsgeräusche.

Der Verdampfer 103 umfasst daher einen Rohrbereich 107 mit einem ersten Strömungsquerschnitt und einen Verengungsbereich 109 mit einem zweiten Strömungsquerschnitt, der kleiner als der erste Strömungsquerschnitt ist.Durch den Verengungsbereich 109 wird die Geometrie des Verdampfers geändert, um die Strömung des Kältemittels in der Art zu verändern, dass sich ein verbessertes Geräuschverhalten ergibt. Dazu wird der Innenquerschnitt des Verdampfers 103 einmal oder mehrfach verringert, so dass sich eine oder mehrere Kammern 111 ausbilden. Die Verengungsbereiche 109 können dabei derart angeordnet sein, dass die Abmessungen der Kammern, wie beispielsweise Länge, Breite oder Volumen, unterschiedlich sind.

Das Prinzip der Geräuschverminderung des Einlassgeräusches besteht in einer Verringerung des Strömungsquerschnitts im Einlassrohr 105 beim Übergang von dem Rohrbereich 107 in den Verengungsbereich 109 und einer anschließenden Vergrößerung des Strömungsquerschnitts beim Übergang von dem Verengungsbereich 109 in den Rohrbereich 107. Das Verhältnis zwischen demStrömungsquerschnitt im Rohrbereich 107 und dem Strömungsquerschnitt im Verengungsbereich 109 ist beispielsweise größer als 5:1. Im Allgemeinen kann dieses Verhältnis in jedem der Verengungsbereiche 109 unterschiedlich sein.

Das Einlassrohr 105 weist vier unterschiedliche Querschnittsflächenauf. Am Einlasspunkt des Kältemittels am Kapillarrohr 113 ist die Querschnittsfläche Q1. An der Stelle, an der das Kapillarrohr 113 endet, ist die Querschnittsfläche des Einlassrohres Q2. In dem Verengungsbereich 109 ist die verringerte Querschnittsfläche Q3. In dem sich anschließenden Einlassrohr 105 ist die Querschnittsfläche Q4. Dabei kann die Querschnittsfläche Q4 unterschiedlich zur Querschnittsfläche Q2 sein.

Zwischen der Querschnittsfläche Q1 und Querschnittsfläche Q2 wächst die Querschnittsfläche von der Querschnittsfläche des Kapillarrohrs 113 bis zum Einlassrohr 105 an. Zwischen der Querschnittsfläche Q2 und Querschnittsfläche Q3 nimmt die Querschnittsfläche von der Querschnittsfläche des Einlassrohres 105, an der das Kapillarrohr 113 endet, zur Querschnittsfläche des Verengungsbereiches 109 hin ab (in der Nähe des Endes des Kapillarrohrs 113, in der Nähe des Endes des Verdampferrohrs). Zwischen der Querschnittsfläche Q3 und Querschnittsfläche Q4 nimmt die Querschnittsfläche des Verengungsbereiches 109 zum Einlassrohr 105 hin zu.

Der Verengungsbereich 109 ist in der Nähe des Endes des Kapillarrohrs 113 angeordnet. Beispielsweise liegt der Verengungsbereich 109 in einer Entfernung von weniger als 50 mm hinter dem Kapillarrohr 113. Vorzugsweise liegt der Verengungsbereich 109 in einer Entfernung von 10 mm hinter dem Kapillarrohr 113. Ein kleiner Abstand zwischen dem Kapillarrohr 113 und dem Verengungsbereich 109 ist für die Geräuscheigenschaften besonders günstig.

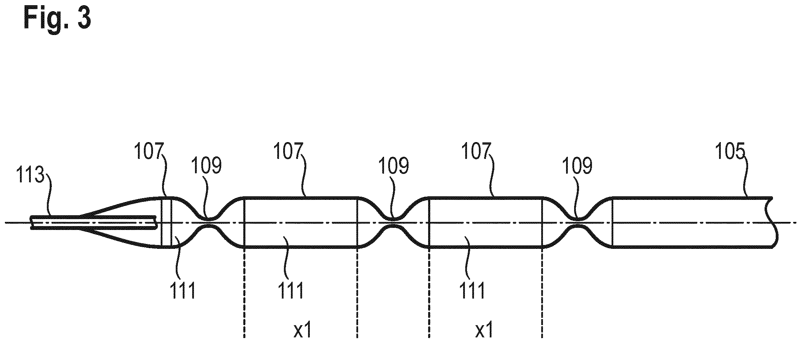

Fig. 3 zeigt eine schematische Querschnittsansicht des Einlassrohres 103 in einer weiteren Ausführungsform. In dieser Ausführungsform umfasst das Einlassrohr 103 drei Verengungsbereiche 109, so dass drei Kammern 111 gebildet werden, in die das Kältemittel strömt. Die Kammern weisen einen Rohrbereich 109 auf, der über eine vorgegebene Länge x1 einen konstanten Strömungsquerschnitt aufweist. Durch diese Ausführungsform lässt sich das Geräuschverhalten noch weiter verbessern. Die Form und Abmessungen der Verengungsbereiche 109 im Einlassrohr 105 können im Allgemeinen unterschiedlich zueinander sein. Ebenfalls können die Abständeder Verengungsbereiche 109 zueinander unterschiedlich sein. Die Verengungsbereiche 109 können einen rechteckigen Querschnitt aufweisen, die durch seitliches Zusammendrücken des Einassrohres 105 erzeugt worden sind. Dadurch lässt sich ein hoher Schalldruckpegel bei Einspritzvorgängen des Kältemittels verringern

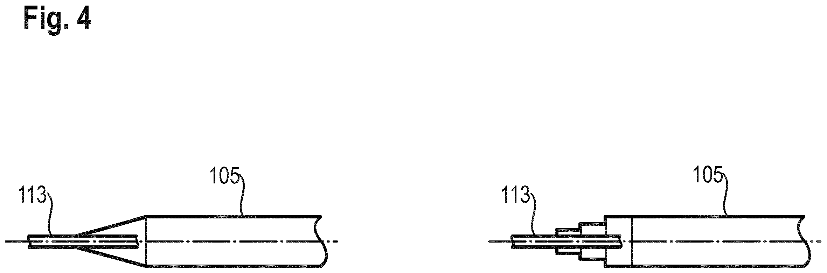

Fig. 4 zeigt einen Anschlussbereich des Einlassrohres 105 für ein Kapillarrohr 113. Die Einlassstelle des Kältemittels am Anschlussbereich bildet den Übergang zwischen dem Hochdruckabschnitt und dem Niederdruckabschnitt des Kältemittelkreislaufs. An diesem Punkt tritt eine plötzliche Änderung des Strömungsquerschnitts vom Kapillarrohrs 113in das größere Einlassrohr 105 des Verdampfers 103 auf. Die Ausdehnung des Kältemittels an diesem Punkt wird von Einlassgeräuschen begleitet. Um das Geräuschverhalten zusätzlich zu verbessern, wird der Querschnitt des Anschlussbereichs des Einlassrohres 105 zunehmend vergrößert.

Beispielsweise weitet sich im Anschlussbereich das Einlassrohr 105 konisch oder treppenförmig auf. Der Querschnitt des Einlassrohres 105 wird dadurch nach der Einspritzung des Kältemittels langsam vergrößert bis der eigentliche Strömungsquerschnitt des Einlassrohres 105 erreicht ist. Dadurch werden Strömungsgeräusche an der Einspritzstelle vom Drosselorgan oder Kapillarrohr in den Verdampfer zusätzlich verringert.

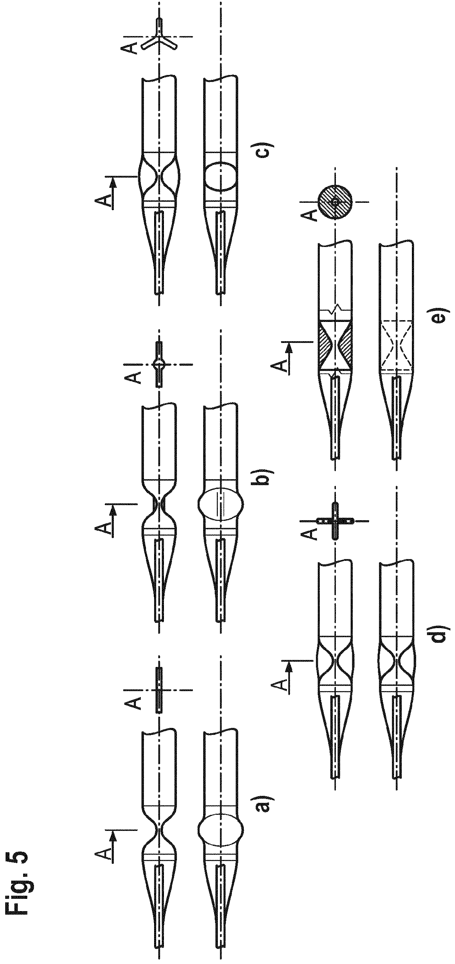

Fig. 5 zeigt mehrere Verengungsbereiche 109. Im Teil a) ist ein rechteckiger Querschnitt gezeigt. Im Teil b) ist ein kreisförmiger Querschnitt gezeigt. Im Teil c) ist ein sternförmiger Querschnitt mit drei Ecken gezeigt. Im Teil d) ist ein rechteckiger Querschnitt mit vier Ecken gezeigt. In Teil e) ist ein Drosselteil zum Einsetzen in das Einlassrohr 105 gezeigt, das den Verengungsbereich 109 umfasst.

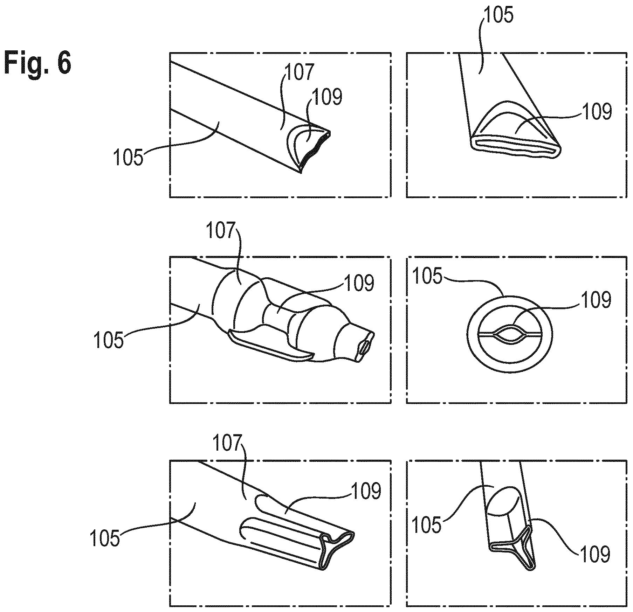

Fig. 6 zeigt nochmals mehrere Verengungsbereiche 109 in unterschiedlichen Ausführungsformen. Der Strömungsquerschnitt des Verengungsbereichs 109 kann unterschiedlich ausgebildet sein. Beispielsweise kann der Strömungsquerschnitt eine rechteckige, kreisförmige oder sternförmige Form aufweisen.

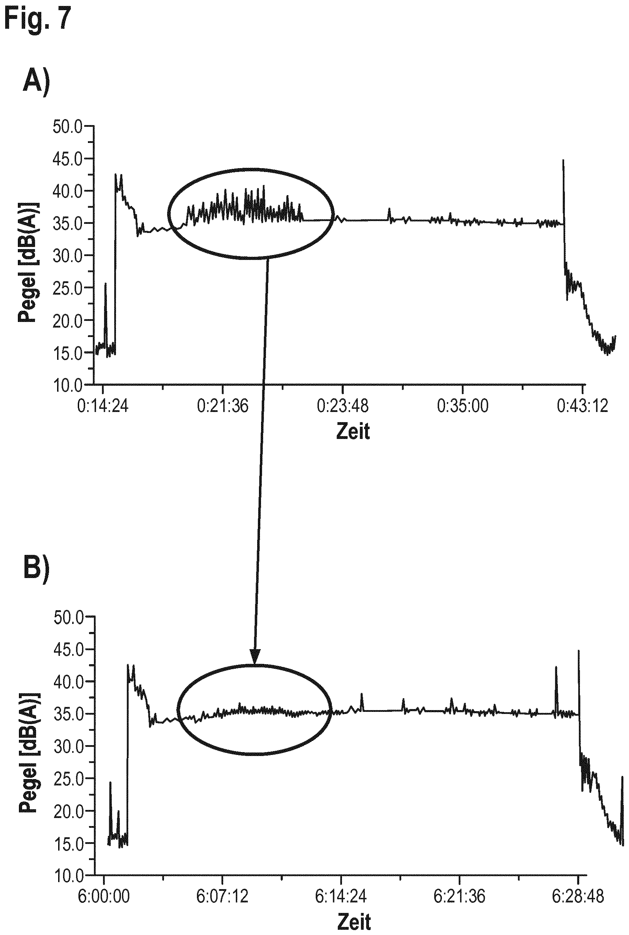

Fig. 7 zeigt Diagramme der Geräuschentwicklung des Verdampfers 103 mit und ohne Verengungsbereich. Das Diagramm A) zeigt die Geräuschentwicklung des Verdampfers 103 beim Einlassen des Kältemittels, wenn im Einlassrohr 105kein Verengungsbereich 109 gebildet ist. In diesem Fall entsteht beim Einlassen des Kältemittels ein Rauschen, das im Diagramm durch eine Ellipse markiert ist.

Wird in dem Einlassrohr 105 mindestens eine Verengungsbereich 109 gebildet, die den Strömungsquerschnitt gegenüber dem übrigen Einlassrohr 105 verringert, nimmt das Rauschenbeim Einlassen des Kältemittels in den Verdampfer 103 ab.Der Verengungsbereich 109 reduziert die charakteristischen Einspritzgeräusche auf ein Minimum. Dies ist im Diagramm B) gezeigt.

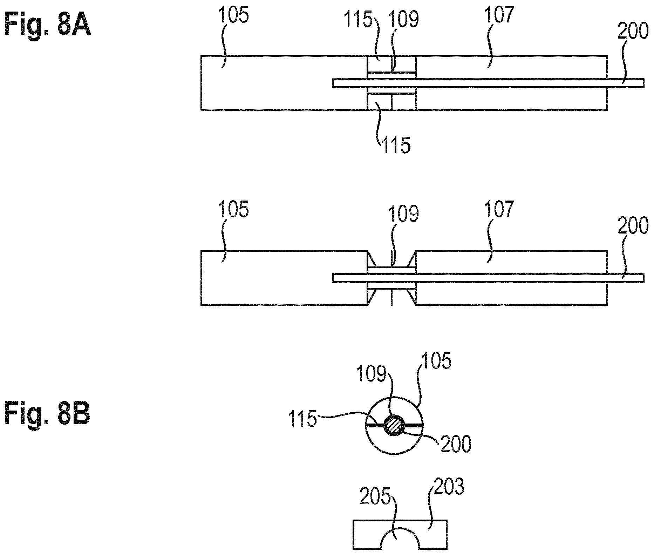

Fig. 8A zeigt ein Verfahren zum Herstellen des Verdampfers 103 für das Kältegerät 100. Dazu ist das Einlassrohr 105 mit eingesetztem Stützdorn 200 in Aufsicht und in Seitenansicht darstellt. In einem ersten Schritt wird ein Stützdorn 200, dessen Außenabmessungen die Form des Verengungsbereichs 109 definieren, in das Einlassrohr 105 eingeführt. In einem zweiten Schritt wird dann das Einlassrohr 105 entlang des Stützdorns 200, auf den durch den Stützdorn 200 vorgegebenen Strömungsquerschnitt zusammengepresst, um den Verengungsbereich 109 zu erzeugen. In einem dritten Schritt wird der Stützdorn 200 aus dem Einlassrohr 105 entfernt.

Fig. 8B zeigt den Verengungsbereich 109 in Querschnittsansicht mit eingesetztem Stützdorn 200. Der Stützdorn 200 kann im Querschnitt kreisförmig sein, so dass eine Prägung eines runden Strömungsquerschnitts im Verengungsbereich 109 erfolgt. Das Zusammenpressen erfolgt beispielsweise mit geformten Backenelementen 203 auf den runden Stützdorn 200, die eine halbkreisförmige Aussparung 205 umfassen. Dadurch werden links und rechts des Verengungsbereiches 109 Seitenflächen 115 erzeugt, die den Verengungsbereich 109 zusätzlich stabilisieren. Es entsteht ein runder Querschnitt, der beispielsweise einen Durchmesser von 1,7 mm aufweist. Daneben entsteht eine Sicke, die Festigkeit imVerengungsbereich 109 erhöht, so dass ein zusätzliches Versteifungsteil für das entfallen kann.

Im Allgemeinen können jedoch auch Stützdorne mit anderen Formen verwendet werden, so dass sich andere Strömungsquerschnitte im Verengungsbereich ergeben. Beispielsweise kann ein Stützdorn 200 mit einem rechteckigen oder quadratischen Profil verwendet werden, so dass sich ein rechteckiger oder quadratischer Strömungsquerschnitt ergibt, beispielsweise von 7 mm x 0,3 mm. In diesem Fall können gerundete, gerade Backenelementezur Prägung verwendet werden, die senkrecht zur Rohrachse aufgedrückt werden. ImBereich der Prägungen lässt sich das Einassrohr 105 sehr leicht biegen und knicken.

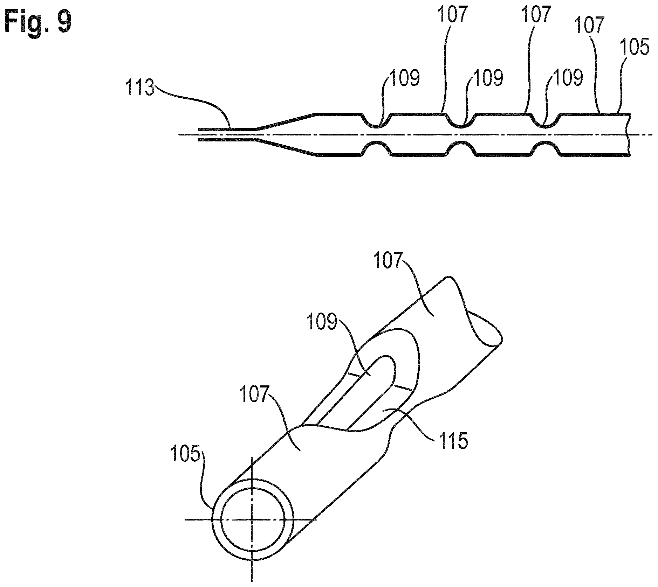

Fig. 9 zeigt das Einlassrohr 105 nach ausgeführtem Prägevorgang. In der Mitte des Einlassrohres 105 sind ein oder mehrereVerengungsbereiche 109 gebildet, die die Seitenflächen 115 aufweisen.

Durch den Verdampfer 103 wird eine Verringerung von Einspritzrauschen im Kältegerät erreicht. Der Verdampfer 103 ist auf einfache Weise herstellbar. Die Anzahl an Verengungsbereichen 109 und deren Form ist variabel.

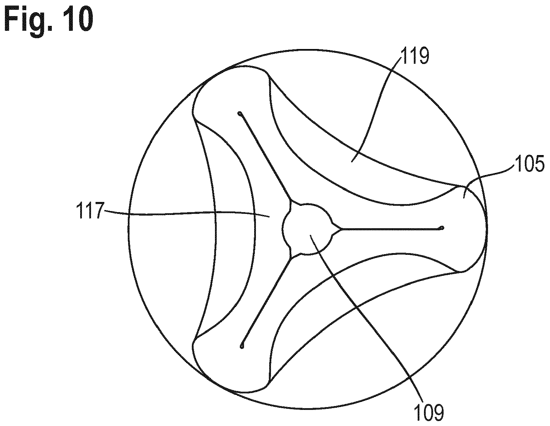

Fig. 10 zeigt einen weiteren Verengungsbereich 109 des Einlassrohres 105 in Querschnittsansicht. Der Verengungsbereich 109 wird dadurch erzeugt, dass eine Rohrwand 117 des Einlassrohres 105 durch ein Werkzeug radial an drei Positionen nach Innen umgeformt wird. Dadurch entstehen an der Außenseite des Verengungsbereiches 109 konkave Einwölbungen 119, die in Umfangsrichtung jeweils um 120° voneinander getrennt sind.

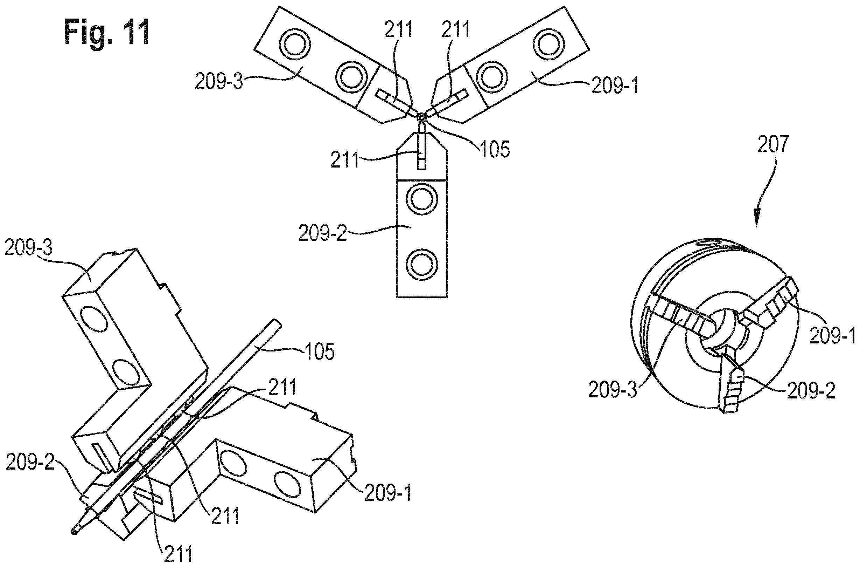

Fig. 11 zeigt ein Werkzeug 207 zum Herstellen des Einlassrohres 105,mit dem Verengungsbereich 109. Das Werkzeug 207 umfasst drei Umformeinsätze 209-1, 209-2, 209-3, die von dem Werkzeug 207 in radialer Richtung auf das Einlassrohr 105 gedrückt werden, um die konkaven Einwölbungen 119 zu erzeugen. Durch die seitliche Deformation desEinlassrohres 105 entsteht im Inneren des Einlassrohres 105 der Verengungsbereich 109. Jeder der Umformeinsätze 209-1, 209-2, 209-3 umfasst an der Spitze drei rollenförmige, kugelförmige,länglich-kugelförmige oder zeppelinförmige Prägeabschnitte 211, die beim Herstellen der Einwölbungen 119 auf die Rohrwand 117 drücken.

Dadurch lassen sich durch einmaliges Aufdrücken einesUmformeinsatzes 209-1, 209-2, 209-3 gleichzeitig drei Einwölbungen erzeugen.Der Innenquerschnitt des Verengungsbereiches 109 wird durch den eingeschobenen Stützdorn 200definiert. Dadurch hat die Rohrtoleranz keinen Einfluss auf den Innendurchmesser des Verengungsbereiches 109. Der Stützdorn 200 wird nach dem Umformprozess aus dem geformten Einlassrohr herausgezogen.

Durch das Werkzeug 207 wird eine Querschnittsveränderung anhand einer mechanischen Umformung erreicht, indem die Umformeinsätze 209-1, 209-2, 209-3 auf Kraft, Druck oder Anschlag aufgedrückt werden. Die Prägeabschnitte 211 sind jeweils in einer Aussparung der Umformeinsätze 209-1, 209-2, 209-3 eingesetzt.

Die Umformeinsätze 209-1, 209-2, 209-3 werden durch das Werkzeug 207 in radialer Richtung geführt. Im Allgemeinen ist die Anzahl der Umformeinsätze nicht auf drei beschränkt. In gleicher Weise können zwei oder vier Umformeinsätze verwendet werden. Durch die durch das Werkzeug 207 erzeugten Deformationen findet eine Geräuschoptimierung durch Deformationen amKältemittelrohr im Bereich der Einspritzstelle statt. Eine Prägung oder Formgebung kann bei Bedarf einmal oder mehrmals hintereinander in Linie erfolgen. Die Prägung Kann direkt am oder im Einspritzbereich oder anderen Stellen des Einlassrohres 105 erfolgen.

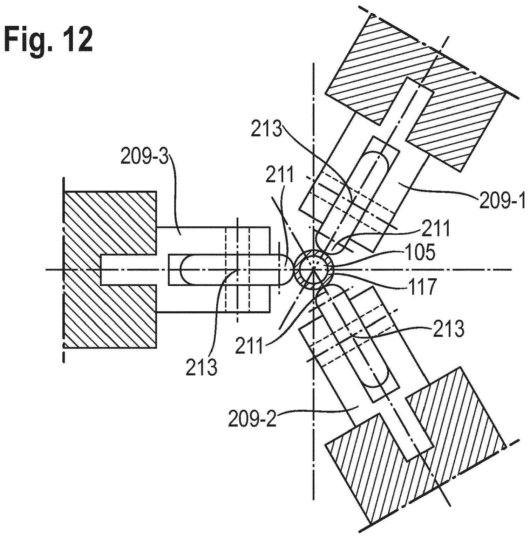

Fig. 12 zeigt das Werkzeug 207 zum Herstellen des Einlassrohres 105 in Querschnittsansicht. Die Prägeabschnitte 211 der radial verschiebbaren Umformeinsätze 209-1, 209-2, 209-3 sind durch Rollen 213gebildet, die ein im Querschnitt halbkreisförmiges Außenprofil aufweisen. Die Rollen 213 sind in den jeweiligen Umformeinsätzen 209-1, 209-2, 209-3 drehbar gelagert. Durch die Rollen 213 wirdbei der Umformung eine entsprechende Einwölbung 119 erzeugt.

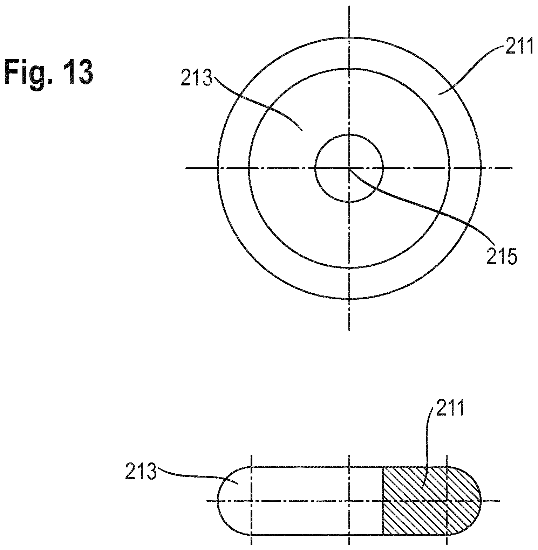

Fig. 13 zeigt einen Prägeabschnitt 211, der durch eine Rolle 213 gebildet wird. Die Rolle 213 umfasst eine Öffnung 215, durch die ein Stift gesteckt wird, um die Rolle 213 an dem Umformeinsatz 209-1, 209-2, 209-3 zu befestigen. Die Rolle 213 ist beispielsweise aus einem Hartmetall gebildet, um einen Werkzeugverschleiß beim Prägen gering zu halten.

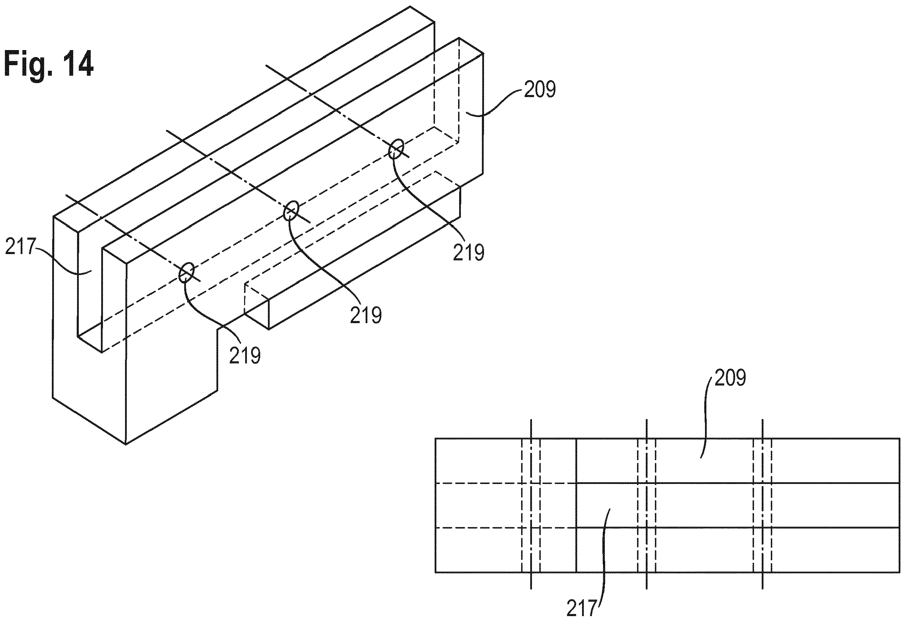

Fig. 14 zeigt einen L-förmigen Umformeinsatz 209 des Werkzeugs 207, der als Rollenhalter dient. Der Umformeinsatz 209 umfasst eine rechteckige Aussparung 217, die zum Einsetzen der Rollen 213 als Prägeabschnitt 211 dient. Die Rollen 213 werden durch Stifte an den jeweiligen Positionen der Öffnungen 219 befestigt. Der Umformeinsatz 209 dient als dreifaches Spannfutter und Schiene für die Rollen 213. Die Rollen 213 erzeugen als Prägeabschnitt 211 die entsprechenden Einwölbungen 119 in der Rohrwand117.

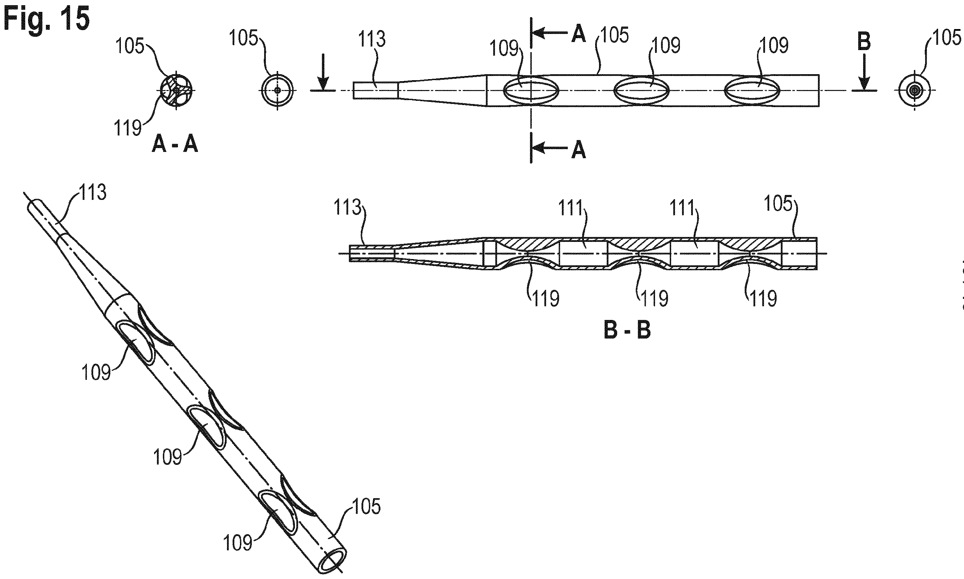

Fig. 15 zeigt Ansichten Einlassrohres 105, das mit dem Werkzeug 207 hergestellt ist.Maßgebend für die Steifigkeit und die akustischen Verbesserung ist die geometrische Form und Ausprägung des Werkzeuges 207. Durch die Umformung der Rollen 213 umfasstdas Einlassrohr 105 im Querschnitt kreisförmige Verengungsbereiche 109. Zwischen jeweils zwei Verengungsbereichen 109 entsteht eine Kammer 111.

Durch die geometrische Form des Einlassrohres 105 werdendie Steifigkeit und dasBiegemoment erhöht. Ein Abknickendes Einlassrohres 105 oder eine Querschnittsveränderung des Verengungsbereiches 109 während des anschließenden Montagprozesseswird verhindert. Eine Geräuschentwicklung und eineAkustik wirdverringert.

Durch das Werkzeug 207 werden eine akustische Verbesserung der Serienproduktion, eine Erhöhung der Steifigkeit bei einer Biegebeanspruchung und eine Prozesssicherheit beim Herstellen der Geometrie erzielt.

Durch das Verfahren zum Herstellen des Verdampfers wird die Rohroberfläche des Einlassrohres 105 nicht beschädigt oder verletzt.Dadurch wird eine Leckage im Formgebungsprozess, beispielsweise durch Risse, ausgeschlossen.

Alle in Verbindung mit einzelnen Ausführungsformen der Erfindung erläuterten und gezeigtenMerkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Kältegerät
- 103: Verdampfer
- 105: Einlassrohr
- 107: Rohrbereich
- 109: Verengungsbereich
- 111: Kammer
- 113: Kapillarrohr
- 115: Seitenfläche
- 117: Rohrwand
- 119: Einwölbung

- 200: Stützdorn
- 203: Backenelemente
- 205: Aussparung
- 207: Werkzeug
- 209: Umformeinsatz
- 211: Prägeabschnitt
- 213: Rolle
- 215: Öffnung
- 217: Aussparung
- 219: Öffnung

## Patentansprüche

1. Kältegerät (100) mit einem Verdampfer (103) zum Verdampfen eines Kältemittels, der ein Einlassrohr (105) zum Einlassen des Kältemittels umfasst, in dem ein Rohrbereich (107) mit einem ersten Strömungsquerschnitt und ein Verengungsbereich (109) mit einem zweiten Strömungsquerschnitt gebildet ist, der kleiner als der erste Strömungsquerschnitt ist, wobei der Verengungsbereich (109) durch mehrere im Querschnitt durch das Einlassrohr (105) konkave Einwölbungen (119) einer Rohrwand (117) des Einlassrohres (105) gebildet ist und **dadurch gekennzeichnet, dass** zwischen zwei Verengungsbereichen (109) ein Rohrbereich (107) angeordnet ist, der über eine vorgegebene Länge (x1) einen konstanten, ersten Strömungsquerschnitt aufweist.

2. Kältegerät (100) nach Anspruch 1, **dadurch gekennzeichnet, dass** durch den Verengungsbereich (109) eine Kammer (111) im Einlassrohr (105) gebildet wird.

3. Kältegerät (100) nach einem der vorangehenden Ansprüche, **dadurch gekennzeichnet, dass** das Einlassrohr (105) mehrere Verengungsbereiche (109) umfasst.

4. Kältegerät (100) nach einem der vorangehenden Ansprüche, **dadurch gekennzeichnet, dass** der Verengungsbereich (109) einen kreisförmigen, rechteckigen oder sternförmigen Querschnitt aufweist.

5. Kältegerät (100) nach einem der vorangehenden Ansprüche, **dadurch gekennzeichnet, dass** das Einlassrohr (105) einen konischen Anschlussbereich (111) für ein Kapillarrohr (113) umfasst.

6. Kältegerät (100) nach Anspruch 5, **dadurch gekennzeichnet, dass** der Verengungsbereich(109) direkt nach dem Anschlussbereich (111) angeordnet ist.

7. Kältegerät (100) nach einem der vorangehenden Ansprüche, **dadurch gekennzeichnet, dass** der Verengungsbereich (109) in einem Abstand von weniger als 50 mm nach einem Ende eines Kapillarrohres (113) angeordnet ist.

8. Kältegerät (100) nach einem der vorangehenden Ansprüche, **dadurch gekennzeichnet, dass** das Verhältnis zwischen dem ersten Strömungsquerschnitt und dem zweiten Strömungsquerschnitt größer als 5:1 ist.

9. Verfahren zum Herstellen eines Verdampfers (103) für ein Kältegerät (100), der ein Einlassrohr (105) zum Einlassen eines Kältemittels umfasst, **dadurch gekennzeichnet, dass** das Verfahren die Schritte umfasst:
Einführen eines Stützdorns (200), der das Profil eines zweiten Strömungsquerschnitts vorgibt, in das Einlassrohr (105) mit einem ersten Strömungsquerschnitt; Zusammenpressen des Einlassrohres (105), auf den durch den Stützdorn (200) vorgegebenen zweiten Strömungsquerschnitt, um einen Verengungsbereich (109) zu erzeugen; und
Entfernen des Stützdorns (200) aus dem Einlassrohr (105).

10. Verfahren nach Anspruch 9, **dadurch gekennzeichnet, dass** das Zusammenpressendes Einlassrohres (105) mittels eines radial zur Mitte des Einlassrohres (105) verschiebbaren Umformeinsatzes (209) eines Werkzeuges (207)durchgeführt wird.

11. Verfahren nach Anspruch 10, **dadurch gekennzeichnet, dass** beim Zusammenpressen jede konkave Einwölbung (119) in einer Rohrwand (117) des Einlassrohrs (105) durch einen Prägeabschnitt (211) des Umformeinsatzes (209) erzeugt wird.

12. Verfahren nach Anspruch 11, **dadurch gekennzeichnet, dass** der Prägeabschnitt (211) durch eine Rolle (213) gebildet wird, die an dem Umformeinsatz (209) drehbar gelagert ist.

13. Verfahren nach einem der Ansprüche 10 bis 12, **dadurch gekennzeichnet, dass** beim Zusammenpressen die mehreren konkaven Einwölbungen (119) durch mehrere Prägeabschnitte (211)des Umformeinsatzes (209)gleichzeitig erzeugt werden.

## Claims

1. Refrigeration appliance (100) having an evaporator (103) for evaporating a refrigerant, which comprises an inlet pipe (105) for admitting the refrigerant, in which inlet pipe (105) a pipe region (107) is formed with a first flow cross section and a constriction region (109) is formed with a second flow cross section, which is smaller than the first flow cross section, **wherein** the constriction region (109) is formed by a number of concave inward curvatures (119) of a pipe wall (117) of the inlet pipe (105) cross-sectionally through the inlet pipe (105) and **characterised in that** a pipe region (107) is arranged between two constriction regions (109), said pipe region (107) having a constant, first flow cross section over a predetermined length (x1).

2. Refrigeration appliance (100) according to claim 1, **characterised in that** the constriction region (109) forms a chamber (111) in the inlet pipe (105).

3. Refrigeration appliance (100) according to one of the preceding claims, **characterised in that** the inlet pipe (105) comprises a number of constriction regions (109).

4. Refrigeration appliance (100) according to one of the preceding claims, **characterised in that** the constriction region (109) has a circular, rectangular or star-shaped cross section.

5. Refrigeration appliance (100) according to one of the preceding claims, **characterised in that** the inlet pipe (105) comprises a conical connecting region (111) for a capillary tube (113).

6. Refrigeration appliance (100) according to claim 5, **characterised in that** the constriction region (109) is arranged directly after the connecting region (111).

7. Refrigeration appliance (100) according to one of the preceding claims, **characterised in that** the constriction region (109) is arranged at a distance of less than 50 mm after one end of a capillary tube (113).

8. Refrigeration appliance (100) according to one of the preceding claims, **characterised in that** the ratio of the first flow cross section to the second flow cross section is greater than 5:1.

9. Method for producing an evaporator (103) for a refrigeration appliance (100), which comprises an inlet pipe (105) for admitting a refrigerant, **characterised in that** the method comprises the following steps:
inserting a mandrel (200), which predetermines the profile of a second flow cross section, into the inlet pipe (105) with a first flow cross section;
compressing the inlet pipe (105) to the second flow cross section predetermined by the mandrel (200), in order to produce a constriction region (109); and
removing the mandrel (200) from the inlet pipe (105).

10. Method according to claim 9, **characterised in that** the compression of the inlet pipe (105) is performed using a forming insert (209) of a tool (207) that can be displaced radially in relation to the centre of the inlet pipe (105).

11. Method according to claim 10, **characterised in that** each concave inward curvature (119) is produced in a pipe wall (117) of the inlet pipe (105) by a shaping segment (211) of the forming insert (209) during compression.

12. Method according to claim 11, **characterised in that** the shaping segment (211) is formed by a roller (213), which is supported in a rotatable manner on the forming insert (209).

13. Method according to one of claims 10 to 12, **characterised in that** the number of concave inward curvatures (119) are produced simultaneously by a number of shaping segments (211) of the forming insert (209) during compression.

## Revendications

1. Appareil frigorifique (100) avec un évaporateur (103) pour l'évaporation d'un agent frigorifique, qui comprend un tuyau d'admission (105) pour l'admission de l'agent frigorifique, dans lequel une zone de tuyau (107) est constituée avec une première section d'écoulement et une zone de rétrécissement (109) avec une deuxième section d'écoulement inférieure à la première section d'écoulement, dans lequel la zone de rétrécissement (109) est constituée par plusieurs bombements concaves (119) d'une paroi de tuyau (117) du tuyau d'admission (105) dans la section à travers le tuyau d'admission (105) et **caractérisé en ce qu'**une zone de tuyau (107) présentant sur une longueur préalablement établie (x1) une première section d'écoulement constante est disposée entre deux zones de rétrécissement (109).

2. Appareil frigorifique (100) selon la revendication 1, **caractérisé en ce que** la zone de rétrécissement (109) constitue une chambre (111) dans le tuyau d'admission (105).

3. Appareil frigorifique (100) selon l'une des revendications précédentes, **caractérisé en ce que** le tuyau d'admission (105) comprend plusieurs zones de rétrécissement (109).

4. Appareil frigorifique (100) selon l'une des revendications précédentes, **caractérisé en ce que** la zone de rétrécissement (109) présente une section circulaire, rectangulaire ou en étoile.

5. Appareil frigorifique (100) selon l'une des revendications précédentes, **caractérisé en ce que** le tuyau d'admission (105) comprend une zone de raccordement conique (111) pour un tube capillaire (113).

6. Appareil frigorifique (100) selon la revendication 5, **caractérisé en ce que** la zone de rétrécissement (109) est disposée directement après la zone de raccordement (111).

7. Appareil frigorifique (100) selon l'une des revendications précédentes, **caractérisé en ce que** la zone de rétrécissement (109) est disposée selon un écartement de moins de 50 mm après une extrémité d'un tube capillaire (113).

8. Appareil frigorifique (100) selon l'une des revendications précédentes, **caractérisé en ce que** le rapport entre la première section d'écoulement et la deuxième section d'écoulement est supérieur à 5:1.

9. Procédé de fabrication d'un évaporateur (103) pour un appareil frigorifique (100), qui comprend un tuyau d'admission (105) pour l'admission d'un agent frigorifique, **caractérisé en ce que** le procédé comprend les étapes suivantes :
introduction d'un mandrin d'appui (200), qui détermine le profil d'une deuxième section d'écoulement, dans le tuyau d'admission (105) avec une première section d'écoulement ;
compression du tuyau d'admission (105), sur la deuxième section d'écoulement déterminée par le mandrin d'appui (200), afin de créer une zone de rétrécissement (109) ; et
retrait du mandrin d'appui (200) du tuyau d'admission (105).

10. Procédé selon la revendication 9, **caractérisé en ce que** la compression du tuyau d'admission (105) s'effectue au moyen d'une garniture de déformation (209) d'un outil (207) déplaçable radialement vers le milieu du tuyau d'admission (105).

11. Procédé selon la revendication 10, **caractérisé en ce que** lors de la compression, chaque bombement concave (119) est créé dans une paroi de tuyau (117) du tuyau d'admission (105) par une section d'estampage (211) de la garniture de déformation (209).

12. Procédé selon la revendication 11, **caractérisé en ce que** la section d'estampage (211) est constituée par un rouleau (213) logé en rotation sur la garniture de déformation (209).

13. Procédé selon l'une des revendications 10 à 12, **caractérisé en ce que** lors de la compression, plusieurs bombements concaves (119) sont créés concomitamment par plusieurs sections d'estampage (211) de la garniture de déformation (209).
